# EUROPÄISCHE PATENTANMELDUNG

(11) **EP 2 420 646 A1**
(43) Veröffentlichungstag der Anmeldung: **22.02.2012**
(21) Anmeldenummer: 10172926.7
(22) Anmeldetag: 16.08.2010
(51) Int. Cl.: E21B 17/042, F16L 15/04

(54) **Rohrverbindung**

(71) Anmelder: TPS-Technitube Röhrenwerke GmbH, 54550 Daun (DE)
(72) Erfinder: Norta, Winfried, 54570, Wallenborn (DE)
(74) Vertreter: Zenz

(57) **Zusammenfassung**

Bei einer Rohrverbindung, die ein Muffenelement (1) mit zumindest einem Innengewind (2) und ein Bolzenelement (4) mit Außengewinde (2) umfasst, soll eine Lösung geschaffen werden, die auf konstruktiv einfache Weise und kostengünstig eine verbesserte Rohrverbindung bereitstellt. Dies wird dadurch erreicht, dass die Scheitelfläche (11) des Außengewindes (6) zumindest in einem ersten Gewindeabschnitt (8) eine in Richtung der Vorderflanke (13) abgeschrägt verlaufende Profilfläche (22) umfasst und das Innengewinde (2) einen dazu komplementär ausgebildeten Profilabschnitt (23) der Gewindegrundfläche (18) aufweist, wobei die Rohrverbindung im zusammengeschraubten Zustand im ersten Gewindeabschnitt (8) des Außengewindes (6) ein Eingriffsverhältnis aufweist, bei dem die abgeschrägt verlaufende Profilfläche (22) des Außengewindes (6) mit dem komplementär ausgebildeten Profilabschnitt (23) der Gewindegrundfläche (18) des Innengewindes (2) in Kontakt steht, und bei dem zwischen der Scheitelfläche (15) des Innengewindes (2) und der Gewindegrundfläche (14) des Außengewindes (6) ein Spielraum (S) vorhanden ist.

## Beschreibung

Die Erfindung richtet sich auf eine Rohrverbindung mit einem zumindest ein Innengewinde aufweisenden Muffenelement und einem ein auslaufendes Außengewinde aufweisenden Bolzenelement, wobei das Innen- und das Außengewinde kegelig sind und jeweils ein Gewindeprofil mit einer kegelig verlaufenden Gewindegrundfläche, einer im Wesentlichen parallel zur Gewindegrundfläche verlaufenden Scheitelfläche, einer Rückflanke und einer Vorderflanke umfassen, wobei das Außengewinde einen ersten Gewindeabschnitt mit konstanter Höhe des Gewindeprofils und einen zweiten Gewindeabschnitt mit abnehmender Höhe des Gewindeprofils aufweist, und wobei die Rohrverbindung im zusammengeschraubten Zustand ein Eingriffsverhältnis aufweist, bei dem die Rückflanke des Außengewindes mit der Rückflanke des Innengewindes in Kontakt steht, und bei dem zwischen der Vorderflanke des Außengewindes und der Vorderflanke des Innengewindes ein Spielraum vorhanden ist.

Insbesondere betrifft die vorliegende Erfindung eine kegelige Rohrgewindeverbindung für Rohre, die sowohl zur Förderung von unter Druck stehenden Fluiden, wie beispielsweise Öl oder Gas, als auch als Futterrohr oder sogar für leichte Bohrarbeiten verwendet werden. Solche fluiddichten Rohrverbindungen werden unter anderem bei der Suche nach und Förderung von Öl oder Gas eingesetzt, um große Tiefen erreichen zu können, in denen sich Erdgas- und Erdölvorkommen befinden. Die hier betrachteten Rohrverbindungen erfolgen üblicherweise mit Gewinden, einem Außengewinde auf einem Bolzenelement und einem Innengewinde in einem Muffenelement, die miteinander verschraubt werden. Dabei ist die Verwendung solcher Rohrverbindungen mit kegeligen Gewinden für die Herstellung von Leitungen oder Rohrsträngen der vorstehend beschriebenen Art seit langem bekannt. Solche Rohrverbindungen weisen oftmals zusätzlich ein Dichtsystem auf, wodurch eine Dichtheit der Verbindungen auch bei unterschiedlichsten Beanspruchungen (axialer Zug oder axiale Kompression, innerer oder äußerer Druck, Biegung etc.) gewährleistet werden kann.

Allerdings ist es bei der Montage solcher Rohrstränge oder Rohrleitungen schwierig, lokale Reibungsphänomene und/oder Stöße zwischen den verschraubten Elementen zu vermeiden. Diese Reibungsphänomene und/oder Stöße sind häufig der Grund für lokale Beschädigungen der Rohrverbindungen. Lokale Beschädigungen führen bei Zugbelastungen solcher Rohrleitungen zu Undichtigkeiten, die nur beseitigt werden können, wenn die Zugbelastungen eliminiert werden. Aufeinander folgende Zug-Druck-Lastwechsel haben daher nachteilige Folgen für die Dichtwirkung und führen zur Entstehung von Leckstellen der Rohrverbindungen, die auf diese Weise erzeugt werden.

In letzter Zeit haben die Anforderungen an solche Rohrverbindungen und deren Dichtigkeit zugenommen, da die Notwendigkeit und die Forderung bestehen, von einem Bohrplatz aus mehrere Erdöl- und Erdgaslagerstätten erreichen zu können. Zu diesem Zweck werden die Bohrungen nicht mehr nur komplett senkrecht nach unten ins Erdreich geführt. Vielmehr verlaufen die Bohrungen nun schräg abgelenkt oder sogar waagerecht abgelenkt. Beim abgelenkten Bohren wird eine Abzweigbohrung, die nahezu horizontal oder wieder schräg nach oben verlaufen kann, nach außen von einer vorhandenen vertikalen Bohrung gebohrt. Dabei kann es erforderlich sein, die Rohre und die sie zusammenhaltenden Rohrverbindungen bei ihrem abgelenkten Absenken in den Bohrschacht zu drehen. Dies macht es erforderlich, dass die Rohrverbindungen mit sehr hohen Schraubmomenten festgeschraubt sind, da sonst die Positionierung der Dichtungsflächen verändert werden könnte, wodurch die Dichtwirkung der Rohrverbindungen nicht mehr gewährleistet wäre.

Um den vorstehenden Anforderungen gerecht zu werden, wurden kontinuierlich neue Gestaltungen von Rohrverbindungen entwickelt, um beispielsweise ein Festfressen der Gewindeverbindungen zu vermeiden und die Dichtigkeit auch bei unterschiedlichster Belastungsart zu gewährleisten. Die zurzeit üblicherweise verwendeten Rohrverbindungen mit kegelig verlaufender Steigung sind aufgrund geringfügiger Durchmesserunterschiede des Innen- und Außengewindes im kraftverschraubten Zustand radial vorgespannt und teilen sich in zwei Funktionstypen auf.

Bei dem ersten Funktionstyp weist das Gewinde ein keil- bis sägezahnförmiges Profil mit beidseitig tragenden Gewindeflanken auf, wobei zwischen Scheitelfläche und Gewindegrundfläche ein Spielraum vorhanden ist. Die Vorteile des ersten Funktionstyps sind darin zu sehen, dass der beidseitige Kontakt der Gewindeflanken schädliche Bewegungen im separaten Dichtsystem beim Wechsel von Zug- und Schiebekräften sowie bei Biegung verhindert. Insbesondere Biegebeanspruchungen bei diesem Funktionstyp von Rohrverbindung führen Verschleiß-, Verformungs-und Funktionsprobleme am Dichtsystem herbei. Die Nachteile dieses ersten Funktionstyps sind in einer ungünstigen Koaxialführung beim Kraftverschrauben, in hohen Reibverlusten und in einer großen Streuung der Verschraubmomente zu sehen. Nachteilig ist ferner, dass auftragende Oberflächenbehandlungen einen erhöhten Einfluss auf die handfest verschraubte Position der Gewinde haben. Darüber hinaus führt der einschneidende Effekt der an den Flanken wirkenden Radialverspannung im Bereich des zweiten bzw. unvollkommenen bzw. unvollständigen Rohrgewindeabschnitts zu Reibungsschäden, was eine mehrfache Verschraubbarkeit bzw. Verwendung der Rohrverbindung verhindert und unvorhersehbare Verschraubergebnisse liefert. Auch ist dieser Funktionstyp für unverdickte Rohrenden ungeeignet, wenn eine Belastbarkeit auf Basisrohrniveau angestrebt ist.

Bei dem zweiten bekannten Funktionstyp weist das Gewinde eine Blockprofilform mit zugseitig tragenden, d.h. einseitig tragenden, Gewindeflanken auf. Ferner ist das Eingriffsverhältnis des zweiten Funktionstyps durch einen Kontakt der Gewindegrundfläche des Außengewindes mit der Scheitelfläche des Innengewindes und durch einen Spielraum zwischen den Gewindeflanken, die die Schiebekräfte aufnehmen, charakterisiert. Der Vorteil dieses Funktionstyps ist in einer günstigen Koaxialführung zu sehen, wobei es das bekannteste Gewindeprofil zur Vermeidung von Reibungsschäden ist. Darüber hinaus haben auftragende Oberflächenbehandlungen geringen Einfluss auf die handfest verschraubte Position. Weitere Vorteile dieses Funktionstyps sind geringe Reibverluste und vorhersehbare Verschraubergebnisse aufgrund bekannter Reibverhältnisse. Jedoch besteht ein wesentlicher Nachteil dieses Funktionstyps darin, dass der Spielraum bzw. Spalt zwischen den die Schiebekräfte aufnehmenden Gewindeflanken zu einer Beschädigung des Dichtsystems führt.

Eine Rohrverbindung der eingangs bezeichneten Art, die dem zweiten Funktionstyp entspricht, ist beispielsweise aus der WO 2006/022418 A1 bekannt.

Es besteht ein Bedürfnis nach einer Rohrverbindung, bei welcher im Dichtsystem und am Bolzen- und Muffenelement Verschleiß- und Überlastungserscheinungen infolge von Biegungen, Schiebekräften und Vibrationen im Rohrgestänge vermieden werden. Wünschenswert ist eine Rohrverbindung, die die Vorteile der genannten zwei Funktionstypen derart kombiniert, um deren Nachteile zu eliminieren.

Der Erfindung liegt daher die Aufgabe zugrunde eine Lösung zu schaffen, die auf konstruktiv einfache Weise und kostengünstig eine verbesserte Rohrverbindung bereitstellt und die darüber hinaus die aus dem Stand der Technik bekannten Probleme der zwei vorstehend beschriebenen Funktionstypen löst.

Bei einer Rohrverbindung der eingangs bezeichneten Art wird diese Aufgabe erfindungsgemäß dadurch gelöst, dass die Scheitelfläche des Außengewindes zumindest im ersten Gewindeabschnitt eine in Richtung der Vorderflanke abgeschrägt verlaufende Profilfläche umfasst und das Innengewinde einen dazu komplementär ausgebildeten Profilabschnitt der Gewindegrundfläche aufweist, wobei die Rohrverbindung im zusammengeschraubten Zustand im ersten Gewindeabschnitt des Außengewindes ein Eingriffsverhältnis aufweist, bei dem die abgeschrägt verlaufende Profilfläche des Außengewindes mit dem komplementär ausgebildeten Profilabschnitt der Gewindegrundfläche des Innengewindes in Kontakt steht, und bei dem zwischen der Scheitelfläche des Innengewindes und der Gewindegrundfläche des Außengewindes ein Spielraum vorhanden ist.

Vorteilhafte und zweckmäßige Ausgestaltungen und Weiterbildungen der Erfindung ergeben sich aus den Unteransprüchen.

Durch die Erfindung wird eine Möglichkeit bereitgestellt, mit welcher auf konstruktiv einfache Weise eine verbesserte Rohrverbindung mit statisch gesicherten Eingriffsverhältnissen bereitgestellt wird. Die Erfindung liefert eine Rohrverbindung mit optimierter Kraftübertragung von Zug-, Druck- und Biegekräften. Dadurch, dass die abgeschrägt verlaufende Profilfläche des Außengewindes mit dem komplementär ausgebildeten Profilabschnitt der Scheitelfläche des Innengewindes im ersten Gewindeabschnitt in Kontakt steht, wird eine zusätzliche radiale Vorspannung erzeugt, die in dem Bereich des ersten Gewindeabschnitts einen fixierten Sitz bewirkt, der die Rohrverbindung bei axialer Wechselbeanspruchung infolge alternierender Zug- und Druckkräfte spielfrei hält. Axiale Druckbeanspruchungen werden somit nicht als reine Zusatzbeanspruchungen in das bereits axial vorgespannte Dichtsystem geleitet, sondern zusätzlich von der abgeschrägt verlaufenden Profilfläche des Außengewindes und der komplementär ausgebildeten Gewindegrundfläche des Innengewindes innerhalb des so verspannten Gewindes übertragen. Darüber hinaus erfüllt im ersten Gewindeabschnitt der geringfügige Spielraum zwischen der Scheitelfläche des Innengewindes und der Gewindegrundfläche des Außengewindes sowie zwischen den der Dichtfläche zugewandten Vorderflanken des Außengewindes und den der Dichtfläche abgewandten Vorderflanken des Innengewindes, d.h. den nicht kontaktierenden Gewindeflächen im ersten Gewindeabschnitt, eine zuverlässige Verteilung eines ggf. mit zu verschraubenden Gewindefetts. Die erfindungsgemäße Rohrverbindung zeichnet sich durch hohe Zug- und Druckbelastbarkeit unter extremer kombinierter Beanspruchung aus und ist auch für den rotierenden Einbau mit hohen Drehmomenten geeignet. Schließlich bewirkt die Erfindung bei Verwendung eines Dichtsystems, welches eine Stirnfläche des Bolzenelements und eine dafür als Anschlag dienende Innenschulter des Muffenelements umfasst, eine dauerhafte und zuverlässige Gasdichtigkeit der Verbindung.

Zur Durchmesseranpassung des Bolzenelements ist in Ausgestaltung der erfindungsgemäßen Rohrverbindung vorgesehen, dass das Außengewinde zwischen dem ersten Gewindeabschnitt und dem zweiten Gewindeabschnitt einen Außengewindeübergangsbereich aufweist, in dem das Kegelverhältnis von dem Kegelverhältnis des Außengewindes im ersten Gewindeabschnitt verschieden ist. Dabei ist es besonders von Vorteil, wenn das Kegelverhältnis im Außengewindeübergangsbereich größer ist als das Kegelverhältnis des Außengewindes im ersten und zweiten Gewindeabschnitt. Beispielsweise kann das Kegelverhältnis im Außengewindeübergangsbereich 1:8 und das Kegelverhältnis des Außengewindes im ersten und zweiten Gewindeabschnitt 1:16 betragen. Diese Durchmesseranpassung dient einer optionalen und variablen radialen Verspannung von Muffen- und Bolzenelement.

Für eine angemessene und ausreichende Anpassung des Durchmessers des Bolzenelements ist in Ausgestaltung der Erfindung ferner vorgesehen, dass die Axiallänge des Außengewindeübergangsbereichs weniger als zwei Windungslängen des Außengewindes beträgt, wobei eine Windungslänge der Steigung oder der axialen Länge zwischen zwei Gewindespitzen entspricht.

Ferner ist in Weiterbildung der Erfindung zur Durchmesseranpassung vorgesehen, dass das Innengewinde einen Innengewindeübergangsbereich aufweist, der im zusammengeschraubten Zustand der Rohrverbindung an den Außengewindeübergangsbereich angrenzt. Dabei kann der Innengewindeübergangsbereich beispielsweise im Bereich des ersten Gewindeabschnitts des Außengewindes angeordnet sein.

Die Erfindung sieht in weiterer Ausgestaltung vor, dass in dem Innengewindeübergangsbereich das Gewindeprofil des Innengewindes eine trapezförmige Gestalt annimmt. Dabei kann eine Änderung der Gewindeprofilform sprunghaft erfolgen. Denkbar ist aber auch, dass ausgehend von der Gewindeprofilform im ersten Gewindeabschnitt eine Änderung der Gewindeprofilform des Innengewindes zu einem trapezförmigen Gewindeprofil hin kontinuierlich im Innengewindeübergangsbereich erfolgt.

Gemäß einer vorteilhaften Ausgestaltung der Erfindung beträgt die Axiallänge des Innengewindeübergangsbereichs weniger als zwei Windungslängen des Innengewindes.

In Weiterbildung der Erfindung ist dann vorgesehen, dass im zusammengeschraubten Zustand die Rohrverbindung im zweiten Gewindeabschnitt des Außengewindes ein Eingriffsverhältnis aufweist, bei dem zwischen der Scheitelfläche des Außengewindes und der Gewindegrundfläche des Innengewindes ein Spielraum vorhanden ist, und bei dem die Scheitelfläche des Innengewindes mit der Gewindegrundfläche des Außengewindes in Kontakt steht. Dadurch ist es möglich, Kräfte der Radialverspannung anteilig unterschiedlich in verschiedene Gewindeprofilbereiche zu verteilen. So kann zum Beispiel die beim Kraftverschrauben wirkende Druckreibung der kontaktierenden Gewindeflächen im zweiten Gewindeabschnitt reduziert werden, um Reibschäden zu vermeiden, die potentiell durch radial verlaufende Konturunterbrechungen des Außengewindes erzeugt werden.

Gemäß einer Ausgestaltung der Erfindung weist das Innengewinde durchgängig ein konstantes Kegelverhältnis auf. Beispielsweise kann das Kegelverhältnis des Innengewindes 1:16 betragen. Diesbezüglich würde dann gemäß einer weiteren Ausgestaltung der Erfindung das Kegelverhältnis des Außengewindes im ersten Gewindeabschnitt und/oder im zweiten Gewindeabschnitt 1:16 betragen.

Zur geeigneten Aufnahme von auf die Rohrverbindung wirkenden Zug- und Druckbelastungen ist in Weiterbildung der Erfindung vorgesehen, dass die Vorderflanken von Innen- und Außengewinde einen Winkel relativ zu einer Ebene senkrecht zu der Achse der Rohrverbindung bilden, der zwischen 5° und 30°, vorzugsweise bei 20°, liegt.

Um die Dichtheit der Rohrverbindung sicherzustellen sieht die Erfindung in weiterer Ausgestaltung vor, dass die Rückflanken von Innen- und Außengewinde einen Winkel relativ zu einer Ebene senkrecht zu der Achse der Rohrverbindung bilden, der zwischen -5° und 15°, vorzugsweise bei 10°, liegt.

Darüber hinaus sieht die Erfindung in Weiterbildung vor, dass die in Richtung der Vorderflanke abgeschrägt verlaufende Profilfläche des Außengewindes einen Winkel relativ zu der Achse der Rohrverbindung bildet, der zwischen 10° und 30°, vorzugsweise bei 20°, liegt. Insbesondere im ersten Gewindeabschnitt ist es dadurch möglich, axiale Druckbelastungen von der abgeschrägt verlaufenden Profiloberfläche innerhalb der verspannten Gewinde zu übertragen, anstatt die axialen Druckbelastungen als reine Zusatzbeanspruchungen in ein bereits axial vorgespanntes Dichtsystem zu leiten.

Zu letzterem Zweck ist gemäß einer weiteren Ausgestaltung der Erfindung vorgesehen, dass zumindest im ersten Gewindeabschnitt die Höhe der Vorderflanke des Außengewindes weniger als die Hälfte der Höhe der Rückflanke des Außengewindes beträgt. Zusätzlich sieht die Erfindung in Weiterbildung diesbezüglich vor, dass zumindest im ersten Gewindeabschnitt die Breite der abgeschrägt verlaufenden Profilfläche des Außengewindes größer ist als die Breite der im Wesentlichen parallel zur Gewindegrundfläche verlaufenden Scheitelfläche des Außengewindes.

Schließlich ist in weiterer Ausgestaltung der Erfindung vorgesehen, dass das Muffenelement mit einer für die Stirnfläche des Bolzenelements als Anschlag dienenden Innenschulter ausgestattet ist und gewindefreie Abschnitte von Muffenelement und Bolzenelement eine Dichtfläche bilden, wobei die Innenschulter und die Stirnfläche einen Winkel relativ zu einer Ebene senkrecht zu der Achse der Rohrverbindung bilden, der zwischen 0° und 30° liegt und wobei die Dichtfläche einen Winkel relativ zu der Achse der Rohrverbindung bildet, der zwischen 2° und 15° liegt. Hierbei bilden die Innenschulter, die Stirnfläche und die Dichtfläche ein Dichtsystem, welches der eigentlichen Gewindeverbindung von Innen- und Außengewinde vorgelagert ist. Dabei kann die Stirnfläche zusätzlich die Funktion einer Dichtung übernehmen, wozu sie eine im Wesentlichen ringförmige Fläche am freien Ende des Bolzenelements aufweist, die beim Zusammenschrauben fest auf die Innenschulter des Muffenelements gepresst wird.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 einen Längsschnitt durch eine erfindungsgemäße Rohrverbindung mit Bolzen- und Muffenelement,
Figur 2 eine vergrößerte Darstellung eines Ausschnitts A aus Figur 1,
Figur 3 verschiedene Detailansichten von Ausschnitten aus Figur 2 und
Figur 4 einen exemplarischen Ausschnitt der erfindungsmäßen Rohrverbindung im Längsschnitt für den ersten Gewindeabschnitt.

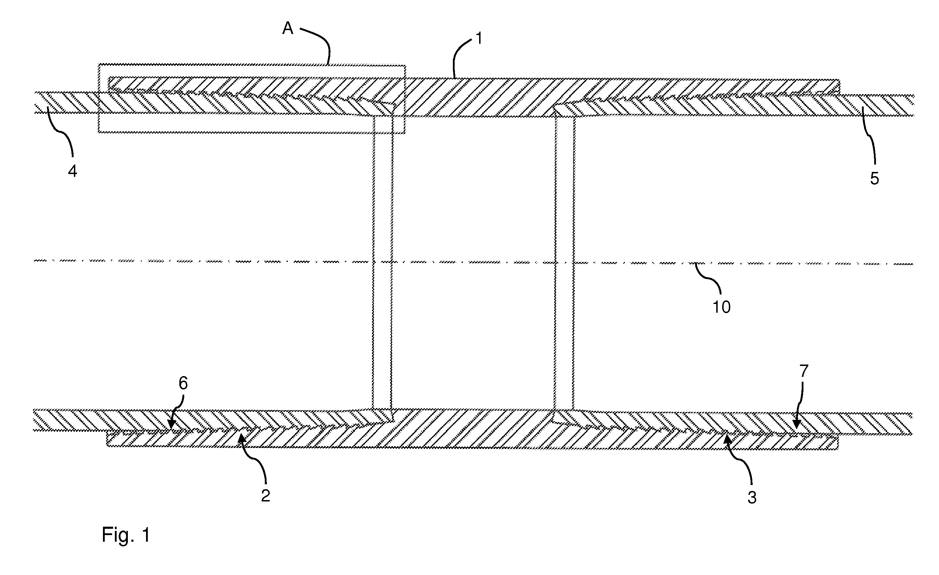

Nachstehend wird die erfindungsgemäße Rohrverbindung mit Bezug auf die Figuren 1 bis 4 detailliert beschrieben. In der Figur 1 ist in einem Längsschnitt eine für die Erfindung typische Rohrverbindung bzw. Gewinderohrverbindung nach Art einer Muffenverbindung dargestellt. Die fluiddichte Rohrverbindung besteht aus einem Muffenelement 1, das mit zwei konisch bzw. kegelig ausgebildeten Innengewindeabschnitten, d.h. den Innengewinden 2 und 3, versehen ist. Die beiden zu verbindenden Bolzenelemente 4 und 5 in Form von Rohren weisen an ihren jeweiligen Endbereichen komplementär zum entsprechenden Innengewinde des Muffenelements 1 ausgebildete Außengewindeabschnitte mit entsprechenden Außengewinden 6 und 7 auf, die ebenfalls konisch bzw. kegelig ausgebildet sind. Dabei weist das Innengewinde 2, 3 des Muffenelements 1 ein kostantes Kegelverhältnis von 1:16 über die gesamte Gewindelänge auf.

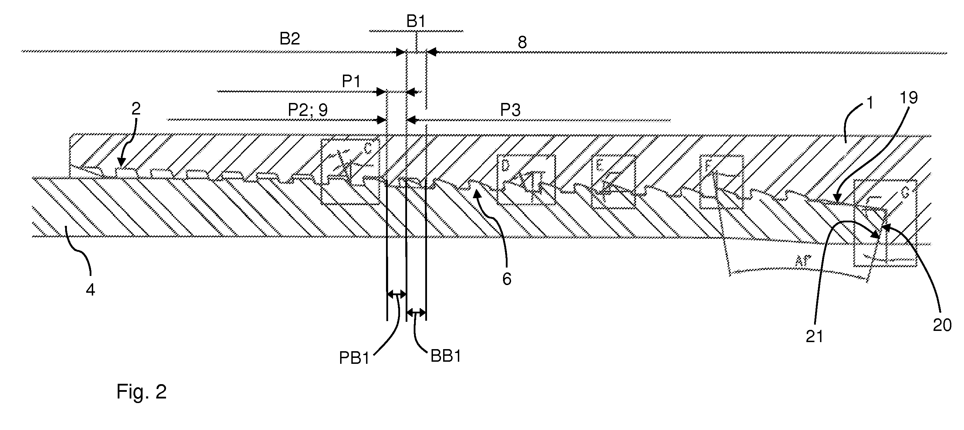

Wie insbesondere der Figur 2 zu entnehmen ist, die eine vergrößerte Detailansicht des Ausschnitts A aus Figur 1 zeigt, handelt es sich bei dem Außengewinde 6 des Bolzenelements 4 um ein auslaufendes Gewinde mit einem ersten Gewindeabschnitt 8, bei dem die Höhe bzw. Nuttiefe des Gewindeprofils konstant ist, und einem zweiten Gewindeabschnitt 9, bei dem die Höhe bzw. die Nuttiefe des Gewindeprofils abnimmt. Der erste Gewindeabschnitt 8 wird im Allgemeinen auch als sogenannter vollständiger Gewindeabschnitt 8 und der zweite Gewindeabschnitt 9 als sogenannter unvollständiger Gewindeabschnitt 9 bezeichnet. Das Bolzenelement 5 ist identisch zu dem Bolzenelement 4 ausgebildet, so dass die vorstehende und nachfolgende Beschreibung des Bolzenelements 4 auch für das Bolzenelement 5 Gültigkeit besitzt. Gleiches gilt für das Innengewinde 3 des Muffenelements 1, welches identisch zu dem Innengewinde 2 ausgebildet ist, weshalb auf die ausführliche Beschreibung für das Innengewinde 2 verwiesen sei.

Im ersten Gewindeabschnitt 8 des Außengewindes 6 ist das kegelig verlaufende Außengewinde 6 voll ausgebildet und besitzt eine konstante Nuttiefe bzw. Profilhöhe für das Gewindeprofil. Demgegenüber weist das Gewindeprofil des zweiten Gewindeabschnitts 9 des Außengewindes 6 eine abnehmende Profilhöhe bzw. Nuttiefe auf, damit der äußere Durchmesser des Außengewindes 6 nicht größer wird als der Außendurchmesser des Bolzenelements 4. Der zweite Gewindeabschnitt 9 umfasst ferner einen Gewindeauslaufabschnitt, der für einen kontinuierlichen Übergang des Außengewindes 6 auf den Außendurchmesser Bolzenelements 4 verwendet wird. Da im zweiten Gewindeabschnitt die Höhe des Gewindeprofils bzw. Nuttiefe des Außengewindes 6 kontinuierlich abnimmt, ist sichergestellt, dass der Außendurchmesser des Außengewindes 6 in keinem Fall den Außendurchmesser des Bolzenelements 4 übersteigt.

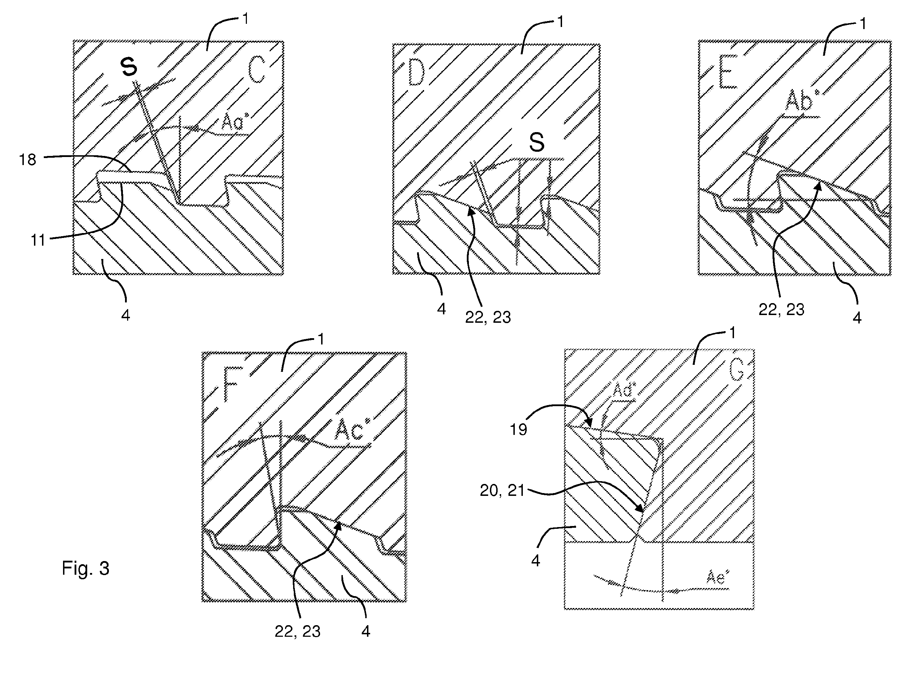

Das Muffenelement 1 und das Bolzenelement 4 weisen jeweils einen gewindefreien Abschnitt auf. Diese gewindefreien Abschnitte bilden im zusammengeschraubten Zustand der Rohrverbindung infolge einer hohen Flächenpressung eine Dichtfläche 19, wie in den Figuren 2 und 3 dargestellt ist. Die Dichtfläche 19 weist eine kegelförmige Abflachung auf, die sich bis zu einer Innenschulter 20 des Muffenelemtens 1 erstreckt. Die Innenschulter 20 dient dabei als Anschlag für die Stirnfläche 21 des in das Muffenelement 1 eingeschraubten Bolzenelements 4. Dabei verläuft die Stirnfläche 21 und die Innenschulter 20 unter einem Winkel Ae° relativ zu einer Ebene senkrecht zu der Achse 10 der Rohrverbindung, der zwischen 0° und 30° liegen kann und vorzugsweise etwa 20° beträgt, wohingegen die Dichtfläche 19 relativ zu einer Ebene senkrecht zur Achse 10 der Rohrverbindung einen Winkel Ad° bildet, der zwischen 2° und 15° liegen kann. Die Flächen der Innenschulter 20 und der Stirnfläche 21 können zusätzlich die Funktion einer Dichtung übernehmen. Diese Art der Dichtung wird auch als vorgelagertes Dichtsystem bezeichnet, bei dem die Dichtung axial betrachtet vor der Gewindeverbindung im Muffenelement 1 innen liegend angeordnet ist.

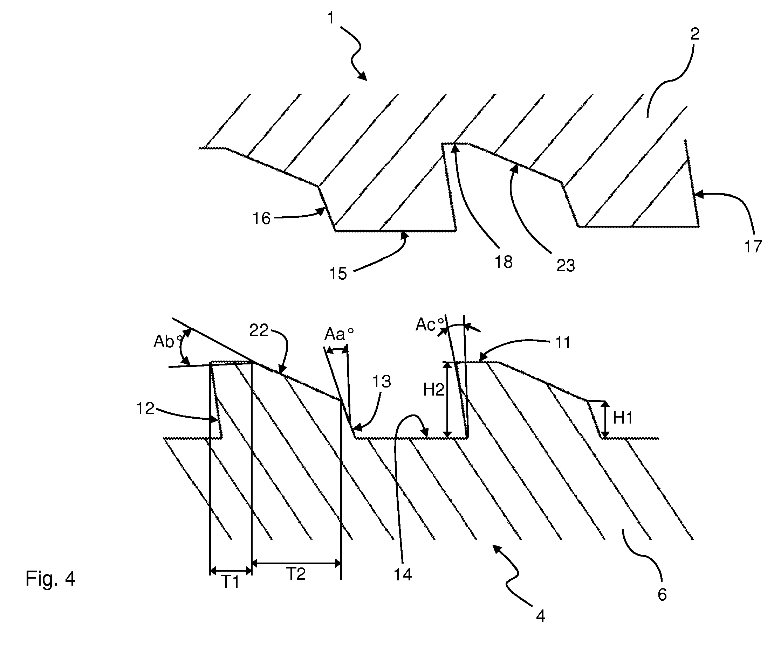

In Figur 4 ist ein Ausschnitt des Muffenelements 1 mit Innengewinde 2 und des Bolzenelements 4 mit Außengewinde 6 in exemplarischer Form für den Bereich des ersten bzw. nutzbaren Gewindeabschnitts 8 dargestellt. Das Gewindeprofil des Außengewindes 6 umfasst eine kegelig verlaufende Gewindegrundfläche 14, eine im Wesentlichen parallel zu der Gewindegrundfläche 14 verlaufende Scheitelfläche 11, eine Rückflanke bzw. Zugflanke 12, die der Dichtfläche 19 abgewandt ist, und eine Vorderflanke 13, die der Dichtfläche 19 zugewandt ist. Das Gewindeprofil des Innengewindes 2 ist komplementär zu dem Gewindeprofil des Außengewindes 6 ausgebildet und umfasst ebenso eine Scheitelfläche 15, eine Vorderflanke 16, die der Dichtfläche 19 abgewandt ist, eine Rückflanke bzw. Zugflanke 17, die der Dichtfläche 19 zugewandt ist, und eine Gewindegrundfläche 18. Erfindungsgemäß umfasst die Scheitelfläche 11 des Außengewindes 6 zumindest im nutzbaren Gewindeabschnitt 8 eine in Richtung der Dichtfläche 19 und in Richtung der Vorderflanke 13 abgeschrägt verlaufende Profilfläche 22. Komplementär zu der abgeschrägt verlaufenden Profilfläche 22 des Außengewindes 6 weist die Gewindegrundfläche 18 des Innengewindes 2 einen abgeschrägt verlaufenden Profilabschnitt 23 auf.

Die Eingriffsverhältnisse des Innengewindes 2 und des Außengewindes 6 im zusammengeschraubten Zustand der Rohrverbindung werden nachstehend mit Bezug auf die Figuren 2, 3 und 4 beschrieben.

Über die gesamte Rohrverbindung bzw. Gewinderohrverbindung steht die der Dichtfläche 19 abgewandte Rückflanke 12 des Außengewindes 6 mit der der Dichtfläche 19 zugewandten Rückflanke 17 des Innengewindes 2 in Kontakt, wobei die Kontaktflächen einen Winkel Ac° relativ zu einer Ebene senkrecht zu der Achse 10 der Rohrverbindung bilden, der vorzugsweise 10° beträgt. Alternativ kann aber auch ein Winkel Ac° gewählt werden, der zwischen -5° und 15° liegt. Ferner ist zwischen der der Dichtfläche 19 zugewandten Vorderflanke 13 des Außengewindes 6 und der der Dichtfläche 19 zugewandten Vorderflanke 16 des Innengewindes 2 ein Spielraum bzw. Spalt S vorhanden, wie die Detailansicht D in Figur 3 zeigt.

Erfindungsgemäß steht die abgeschrägt verlaufende Profilfläche 22 des Außengewindes 6 mit dem komplementär ausgebildeten Profilabschnitt 23 der Gewindegrundfläche 18 des Innengewindes 2 nur in dem ersten bzw. nutzbaren Gewindeabschnitt 8 in Kontakt. Ferner ist nur im ersten Gewindeabschnitt 8, in dem die Nuttiefe bzw. Profilhöhe konstant und voll ausgebildet ist, zwischen der Scheitelfläche 15 des Innengewindes 2 und der Gewindegrundfläche 14 des Außengewindes 6 ein Spielraum bzw. ein Spalt S vorhanden, wie beispielsweise aus der Detailansicht D in Figur 3 hervorgeht.

Demnach kontaktiert das Gewinde im ersten Gewindeabschnitt 8 sowohl an den der Dichtfläche 19 abgewandten Rückflanken 12, 17 von Innen- und Außengewinde 2, 6 und an der abgeschrägt verlaufenden Profilfläche 22 des Außengewindes 6 und dem komplementär dazu ausgebildeten Profilabschnitt 23 des Innengewindes 2, wie insbesondere aus den vergrößerten Ausschnitten E und F in Figur 3 ersichtlich ist. Die Kontaktierung der abgeschrägt verlaufenden Profilfläche 22 des Außengewindes 6 und dem komplementär dazu ausgebildeten Profilabschnitt 23 des Innengewindes 2 bildet einen Winkel Ab° relativ zur Achse 10 der Rohrverbindung. Dieser so gebildete Winkel Ab° beträgt in etwa 20°, wobei alternativ ein davon abweichender Winkel im Bereich von 10° bis 30° gewählt werden kann. Zwischen den nicht in Kontakt stehenden Flächen der der Dichtfläche 19 abgewandten Vorderflanke 16 des Innengewindes 2 und der der Dichtfläche 19 zugewandten Vorderflanke 13 des Außengewindes 6 ist ein Spielraum S bzw. Spalt vorhanden, wobei die Flächen in einem Winkel Aa° senkrecht zur Achse 10 der Rohrverbindung von etwa 20° verlaufen, wobei alternativ der Winkel Aa° zwischen 5° und 30° liegen kann.

Erfindungswesentlich sind die abgeschrägt verlaufende Profilfläche 22 des Außengewindes 6 im ersten Gewindeabschnitt 8 und der komplementär zu der Profilfläche 22 ausgebildete Profilabschnitt 23 der Gewindegrundfläche 18 des Innengewindes 2. Die von der Trapezform abweichende Profilform des Außen- und Innengewindes wird nachstehend mit Bezug auf Figur 4 näher beschrieben. Die Höhe H1 der der Dichtfläche 19 zugewandten Vorderflanke 13 des Außengewindes 6 beträgt weniger als die Hälfte der Höhe H2 der der Dichtfläche 19 abgewandten Rückflanke 12 des Außengewindes 6. Ferner ist zumindest im ersten Gewindeabschnitt 8 die Breite T2 der abgeschrägt verlaufenden Profilfläche 22 des Außengewindes 6 größer als die Breite T1 der im Wesentlichen parallel zur Gewindegrundfläche 14 verlaufenden Scheitelfläche 11 des Außengewindes 6. Demnach unterscheidet sich das beschriebene Gewindeprofil von den aus dem Stand der Technik bekannten Formen durch die abgeschrägt verlaufende Profilfläche 22 des Außengewindes 6 und den abgeschrägt verlaufenden Profilabschnitt 23 des Innengewindes 2, die im ersten Gewindeabschnitt 8 in Kontakt steht.

Die sich kontaktierenden Flächen der abgeschrägt verlaufenden Profilfläche 22 des Außengewindes 6 und des komplementär dazu ausgebildeten Profilabschnitts 23 des Innengewindes 2 erzeugen im ersten Gewindeabschnitt 8 eine zusätzliche radiale Vorspannung infolge der Kraftverschraubung, so dass in dem ersten Gewindeabschnitt 8 ein fixierter Sitz bewirkt wird, der die Rohrverbindung bei axialer Wechselbeanspruchung spielfrei hält. Axiale Druckbelastungen werden somit nicht als reine Zusatzbeanspruchung in das bereits axial vorgespannte Dichtsystem, welches von der Innenschulter 20 und Stirnfläche 21 in Verbindung mit der Dichtfläche 19 gebildet wird, geleitet, sondern von zusätzlich von der mit Winkel Ab° gekennzeichneten Schräge innerhalb der so verspannten Windungen übertragen. Das vorstehend beschriebene Eingriffsverhältnis verspannt demzufolge den ersten Gewindeabschnitt 8 des Außengewindes 6, der axial betrachtet hinter der Dichtfläche 19 mit dem kleinsten Durchmesser beginnt und endet dort, wo der Außengewindedurchmesser des Bolzenelements 4 größer würde als der Außendurchmesser des Bolzenelements 4.

Der Spielraum S zwischen den nicht in Kontakt stehenden Flächen, d.h. der Spalt bzw. das Spiel zwischen der Gewindegrundfläche 14 des Außengewindes 6 und der Scheitelfläche 15 des Innengewindes 2, zwischen der Scheitelfläche 11 des Außengewindes 6 und der Gewindegrundfläche 18 des Innengewindes 2 und zwischen der der Dichtfläche 19 zugewandten Gewindeflanke 13 des Außengewindes 6 und der der Dichtfläche 19 abgewandten Gewindeflanke 16 des Innengewindes 2 (siehe beispielsweise Detailansicht D in Figur 3) ermöglicht in dem ersten Gewindeabschnitt 8 eine zuverlässige Verteilung eines bei der Verschraubung zu verwendenden Gewindefetts.

Mit Bezug auf Figur 2 weist die Rohrverbindung Übergangszonen P1 und B1 auf, innerhalb derer das Profil des Innengewindes 2 und das Profil des Außengewindes 6 auf andere Eingriffsverhältnisse wechseln. Hierzu weist das Außengewinde 6 einen Außengewindeübergangsbereich P1 auf, der sich an den ersten Gewindeabschnitt 8 anschließt und der im zweiten Gewindeabschnitt 9 angeordnet ist. In dem Außengewindeübergangsbereich P1 ist das Kegelverhältnis von dem Kegelverhältnis des Außengewindes 6 im ersten Gewindeabschnitt 8 verschieden. Während das Außengewinde 6 im ersten Gewindeabschnitt 8 und im zweiten Gewindeabschnitt 9 beispielsweise ein Kegelverhältnis von 1:16 aufweist, beträgt das Kegelverhältnis im Außengewindeübergangsbereich P1 zum Beispiel 1:8. Die Breite bzw. Axiallänge PB1 des Außengewindeübergangsbereichs P1 beträgt dabei weniger als zwei Windungslängen des Außengewindes 6. Ferner weist das Innengewinde 2 einen Innengewindeübergangsbereich B1 auf, der im zusammengeschraubten Zustand der Rohrverbindung im Bereich des ersten Gewindeabschnitts 8 des Außengewindes 6 angeordnet ist und an den Außengewindeübergangsbereich P1 angrenzt. In dem Innengewindeübergangsbereich B1 nimmt das Gewindeprofil des Innengewindes 2 eine trapezförmige Gestalt an. Ferner beträgt - wie zuvor für den Außengewindeübergangsbereich P1 - die Breite bzw. Axiallänge BB1 des Innengewindeübergangsbereichs B1 weniger als zwei Windungslängen des Innengewindes 2. Wie insbesondere einem Vergleich der Detailansichten C und E zu entnehmen ist, nimmt im zweiten Gewindeabschnitt 9 die Profilhöhe des Außengewindes 6 kontinuierlich ab, wobei die Höhe H1 der der Dichtfläche 19 zugewandten Gewindeflanke 13 des Außengewindes 6 im Wesentlichen konstant bleibt. Dies führt im zweiten Gewindeabschnitt 9 zu einer Verkleinerung der Breite T2 der abgeschrägt verlaufenden Profilfläche 22 des Außengewindes 6, was aber von geringer Bedeutung ist, da die abgeschrägt verlaufende Profilfläche 22 in diesem Gewindeabschnitt nicht mehr mit dem Innengewinde 2 in Kontakt steht.

Im Bereich des zweiten Gewindeabschnitts 9 stehen im zusammengeschraubten Zustand der Rohrverbindung die der Dichtfläche 19 abgewandte Rückflanke 12 des Außengewindes 6 in Kontakt mit der der Dichtfläche 19 zugewandten Rückflanke 17 des Innengewindes 2. Ferner umfasst das Eingriffsverhältnis im zweiten Gewindeabschnitt 9, dass zwischen der Scheitelfläche 11 des Außengewindes 6 und der Gewindegrundfläche 18 des Innengewindes 2 ein Spielraum bzw. Spalt S vorhanden ist und dass die Scheitelfläche 15 des Innengewindes 2 mit der Gewindegrundfläche 14 des Außengewindes 6 in Kontakt steht. Im Bereich des zweiten Gewindeabschnitts 9 tragen demnach die Rück- bzw. Zugflanken 12 und 17 von Außen- und Innengewinde 6, 2, und die Innenfläche bzw. Scheitelfläche 15 des Innengewindes 2 kontaktiert die Gewindegrundfläche 14 des Außengewindes 6, wie im Detail in dem vergrößerten Ausschnitt C in Figur 3 zu erkennen ist.

Im Außengewindeübergangsbereich P1 wird der Durchmesser des Außengewindes 6 beispielsweise mittels einer Änderung des Kegelverhältnisses angepasst, damit der Gewindeauslaufabschnitt beim Kraftverschrauben in die radiale Verspannung mit einbezogen wird. Das bewirkt einen festen Eingriff der gesamten Rohrverbindung. Die bolzenseitige Durchmesseranpassung im Außengewindeübergangsbereich P1 kann mittels Variation auch genutzt werden, um die Kräfte der Verspannung anteilig unterschiedlich in die verschiedenen Gewindeprofilbereiche zu verteilen. So kann zum Beispiel die beim Kraftverschrauben wirkende Druckreibung der kontaktierenden Flächen im Bereich des zweiten Gewindeabschnitts 9 reduziert werden, um Reibschäden zu vermeiden, die potentiell durch radial verlaufende Konturunterbrechungen des Außengewindes 6 erzeugt werden.

Die vorstehend beschriebenen Eingriffsverhältnisse bieten die Möglichkeit einer bisher unerreichten potenziellen Vorsorge gegenüber Reibungsschäden beim Kraftverschrauben spielfreier Rohrgewindeverbindungen mit zusätzlicher Oberflächenbehandlung (zum Beispiel niedriglegierte Stähle: Mangan- oder Zinkphosphatierung; hochlegierte Stähle: elektrolytisch aufgebrachte Schichten aus Kupfer oder Zinn).

Ein optimales Gesamtergebnis hinsichtlich der Belastbarkeit bzw. Tragfähigkeit der vorstehend im Detail beschriebenen kraftverschraubten Rohrverbindung ist mit folgenden Winkeln realisierbar: Aa°=20°, Ab°=20° und Ac°=10°. Abhängig von der gewählten Gewindesteigung und Profiltiefe und der angestrebten Fähigkeiten können diese Winkel auch größer oder kleiner gewählt werden. Das vorgelagerte Dichtsystem kann ferner beispielsweise mit Winkeln von 2°<Ad°<15° und 0°< Ae°<30° ausgeführt werden, wobei sich die Winkel Ac° und Ae° zum Gesamtwinkel Af° addieren, welcher bei günstiger Wahl und ausreichender Schultertragfähigkeit eine Zwangsverspannung herbeiführt, die das Innengewinde 2 und Außengewinde 6 auch bei hohen Biegekräften und/oder extremer äußerer Druckeinwirkung eines umgebenden Mediums bis ans Limit technischer Machbarkeit zusammen hält.

Insgesamt kann die Verteilung der Radialverspannung auf die Bereiche des ersten Gewindeabschnitts 8 und des zweiten Gewindeabschnitts 9 mittels Durchmesseranpassung im Außengewindeübergangsbereich P1 des Außengewindes 6 beeinflusst werden. Auch kann zusätzlich die Gesamtkraft der Radialverspannung durch Variation der kombinierten Außen- und Innengewindedurchmesser innerhalb elastischer Grenzen der Werkstoffe beeinflusst werden, was beispielsweise mittels einer Überdeckung der Gewinde 2, 3, 6, 7 erzielt werden kann, wobei die Überdeckung im ersten Gewindeabschnitt 8 höher ausfallen kann als im zweiten Gewindeabschnitt 9.

Der Anwendungsbereich der vorliegenden Erfindung bezieht sich auf alle denkbaren Fluidförderleitungsstrecken, bei denen eine fluiddichte Verbindung der einzelnen Rohrsegmente von hoher Bedeutung ist, und erstreckt sich auf Anwendungsgebiete, wie beispielsweise die Förderung flüssiger und gasförmiger Medien, die Exploration von Erdöl und Naturgas aus unterirdischen Lagerstätten sowie die Zwischenspeicherung von Erdöl und Naturgas in unterirdischen Lagerstätten. Die Erfindung findet ferner Anwendung in abgelenkten Bohrungen und kann besonders vorteilhaft bei einbaubedingten Vortriebskräften, aber auch einsatzbedingten Schiebekräften eingesetzt werden. Insbesondere eignet sich die vorgestellte Erfindung (i) zum Verbinden von Stahlrohren mit unverdickten Enden (NUE = Non Upset End), (ii) für Schraubverbinder, die an den Enden der Bolzenelemente bzw. Rohre und im inneren Übergang der Muffenelemente mit metallischen Dichtsitzen hergestellt werden, (iii) für Rohre mit verdickten Enden (EUE = External Upset End) und (iv.) als Integralverbindung bzw. ohne separate Verbindungsmuffe.

Die vorstehend beschriebene Erfindung ist selbstverständlich nicht auf die beschriebene und dargestellte Ausführungsform einer Muffenverbindung bzw. separaten Schraubmuffe beschränkt. Denkbar ist beispielsweise auch eine Rohrverbindung nach Art einer Integralverbindung, bei der je ein Ende der zu verbindenden Rohre anstelle eines Außengewindes einen muffenförmig ausgebildeten Endabschnitt mit Innengewinde aufweist. An der in den Zeichnungen dargestellten Ausführungsform können zahlreiche, dem Fachmann entsprechend der beabsichtigten Anwendung naheliegende Abänderungen vorgenommen werden, ohne dass dadurch der Bereich der Erfindung verlassen wird. Dabei gehört zur Erfindung alles dasjenige was in der Beschreibung enthalten und/oder in der Zeichnung dargestellt ist, einschließlich dessen, was abweichend von den konkreten Ausführungsbeispielen für den Fachmann naheliegt.

## Patentansprüche

1. Rohrverbindung mit einem zumindest ein Innengewinde (2) aufweisenden Muffenelement (1) und einem ein auslaufendes Außengewinde (6) aufweisenden Bolzenelement (4), wobei das Innen- und das Außengewinde (2; 6) kegelig sind und jeweils ein Gewindeprofil mit einer kegelig verlaufenden Gewindegrundfläche (14; 18), einer im Wesentlichen parallel zur Gewindegrundfläche (14; 18) verlaufenden Scheitelfläche (11; 15), einer Rückflanke (12; 17) und einer Vorderflanke (13; 16) umfassen, wobei das Außengewinde (6) einen ersten Gewindeabschnitt (8) mit konstanter Höhe des Gewindeprofils und einen zweiten Gewindeabschnitt (9) mit abnehmender Höhe des Gewindeprofils aufweist, und wobei die Rohrverbindung im zusammengeschraubten Zustand ein Eingriffsverhältnis aufweist,
- bei dem die Rückflanke (12) des Außengewindes (6) mit der Rückflanke (17) des Innengewindes (2) in Kontakt steht, und
- bei dem zwischen der Vorderflanke (13) des Außengewindes (6) und der Vorderflanke (16) des Innengewindes (2) ein Spielraum (S) vorhanden ist,
**dadurch gekennzeichnet, dass** die Scheitelfläche (11) des Außengewindes (6) zumindest im ersten Gewindeabschnitt (8) eine in Richtung der Vorderflanke (13) abgeschrägt verlaufende Profilfläche (22) umfasst und das Innengewinde (2) einen dazu komplementär ausgebildeten Profilabschnitt (23) der Gewindegrundfläche (18) aufweist, wobei die Rohrverbindung im zusammengeschraubten Zustand im ersten Gewindeabschnitt (8) des Außengewindes (6) ein Eingriffsverhältnis aufweist,
- bei dem die abgeschrägt verlaufende Profilfläche (22) des Außengewindes (6) mit dem komplementär ausgebildeten Profilabschnitt (23) der Gewindegrundfläche (18) des Innengewindes (2) in Kontakt steht, und
- bei dem zwischen der Scheitelfläche (15) des Innengewindes (2) und der Gewindegrundfläche (14) des Außengewindes (6) ein Spielraum (S) vorhanden ist.

2. Rohrverbindung nach Anspruch 1, **dadurch gekennzeichnet, dass** das Außengewinde (6) zwischen dem ersten Gewindeabschnitt (8) und dem zweiten Gewindeabschnitt (9) einen Außengewindeübergangsbereich (P1) aufweist, in dem das Kegelverhältnis von dem Kegelverhältnis des Außengewindes (6) im ersten Gewindeabschnitt (8) verschieden ist.

3. Rohrverbindung nach Anspruch 2, **dadurch gekennzeichnet, dass** das Kegelverhältnis im Außengewindeübergangsbereich (P1) 1:8 beträgt.

4. Rohrverbindung nach Anspruch 2 oder 3, **dadurch gekennzeichnet, dass** die Axiallänge (PB1) des Außengewindeübergangsbereichs (P1) weniger als zwei Windungslängen des Außengewindes (6) beträgt.

5. Rohrverbindung nach einem der vorhergehenden Ansprüche, **dadurch gekennzeichnet, dass** das Innengewinde (2) einen Innengewindeübergangsbereich (B1) aufweist, der im zusammengeschraubten Zustand der Rohrverbindung an den Außengewindeübergangsbereich (P1) angrenzt.

6. Rohrverbindung nach Anspruch 5, **dadurch gekennzeichnet, dass** in dem Innengewindeübergangsbereich (B1) das Gewindeprofil des Innengewindes (2) eine trapezförmige Gestalt annimmt.

7. Rohrverbindung nach Anspruch 5 oder 6, **dadurch gekennzeichnet, dass** die Axiallänge (BB1) des Innengewindeübergangsbereichs (B1) weniger als zwei Windungslängen des Innengewindes (2) beträgt.

8. Rohrverbindung nach einem der vorhergehenden Ansprüche, **dadurch gekennzeichnet, dass** im zusammengeschraubten Zustand die Rohrverbindung im zweiten Gewindeabschnitt (9) des Außengewindes (6) ein Eingriffsverhältnis aufweist,
- bei dem zwischen der Scheitelfläche (11) des Außengewindes (6) und der Gewindegrundfläche (18) des Innengewindes (2) ein Spielraum (S) vorhanden ist, und
- bei dem die Scheitelfläche (15) des Innengewindes (2) mit der Gewindegrundfläche (14) des Außengewindes (6) in Kontakt steht.

9. Rohrverbindung nach einem der vorhergehenden Ansprüche, **dadurch gekennzeichnet, dass** das Kegelverhältnis des Innengewindes (2) 1:16 und das Kegelverhältnis des Außengewindes (6) im ersten Gewindeabschnitt (8) und/oder im zweiten Gewindeabschnitt (9) 1:16 betragen.

10. Rohrverbindung nach einem der vorhergehenden Ansprüche, **dadurch gekennzeichnet, dass** die Vorderflanken (13; 16) von Innen- und Außengewinde (2; 6) einen Winkel (Aa°) relativ zu einer Ebene senkrecht zu der Achse (10) der Rohrverbindung bilden, der zwischen 5° und 30°, vorzugsweise bei 20°, liegt.

11. Rohrverbindung nach einem der vorhergehenden Ansprüche, **dadurch gekennzeichnet, dass** die Rückflanken (12; 17) von Innen- und Außengewinde (2; 6) einen Winkel (Ac°) relativ zu einer Ebene senkrecht zu der Achse (10) der Rohrverbindung bilden, der zwischen -5° und 15°, vorzugsweise bei 10°, liegt.

12. Rohrverbindung nach einem der vorhergehenden Ansprüche, **dadurch gekennzeichnet, dass** die in Richtung der Vorderflanke (13) abgeschrägt verlaufende Profilfläche (22) des Außengewindes (6) einen Winkel (Ab°) relativ zu der Achse (10) der Rohrverbindung bildet, der zwischen 10° und 30°, vorzugsweise bei 20°, liegt.

13. Rohrverbindung nach einem der vorhergehenden Ansprüche, **dadurch gekennzeichnet, dass** zumindest im ersten Gewindeabschnitt (8) die Höhe (H1) der Vorderflanke (13) des Außengewindes (6) weniger als die Hälfte der Höhe (H2) der Rückflanke (12) des Außengewindes (6) beträgt.

14. Rohrverbindung nach einem der vorhergehenden Ansprüche, **dadurch gekennzeichnet, dass** zumindest im ersten Gewindeabschnitt (8) die Breite (T2) der abgeschrägt verlaufenden Profilfläche (22) des Außengewindes (6) größer ist als die Breite (T1) der im Wesentlichen parallel zur Gewindegrundfläche (14) verlaufenden Scheitelfläche (11) des Außengewindes (6).

15. Rohrverbindung nach einem der vorhergehenden Ansprüche, **dadurch gekennzeichnet, dass** das Muffenelement (1) mit einer für die Stirnfläche (21) des Bolzenelements (4) als Anschlag dienenden Innenschulter (20) ausgestattet ist und gewindefreie Abschnitte von Muffenelement (1) und Bolzenelement (4) eine Dichtfläche (19) bilden, wobei die Innenschulter (20) und die Stirnfläche (21) einen Winkel (Ae°) relativ zu einer Ebene senkrecht zu der Achse (10) der Rohrverbindung bilden, der zwischen 0° und 30° liegt und wobei die Dichtfläche (19) einen Winkel (Ad°) relativ zu der Achse (10) der Rohrverbindung bildet, der zwischen 2° und 15° liegt.
